# FASCICULE DE BREVET EUROPEEN

(11) **EP 4 547 888 B1**
(45) Date de publication et mention de la délivrance du brevet: **11.11.2026**
(21) Numéro de dépôt: 23730539.6
(22) Date de dépôt: 15.06.2023
(51) Int. Cl.: C23C 28/00, C23C 14/16, C23C 14/58, H01M 8/0206, H01M 8/021, H01M 8/0213, H01M 8/0228, C23C 18/12, F24S 70/20

(54) **REVETEMENT D'UN SUBSTRAT METALLIQUE AVEC UNE COUCHE EXTERNE CARBONEE OBTENUE PAR LA METHODE SOL-GEL**
BESCHICHTUNG EINES METALLSUBSTRATS MIT EINER NACH DEM SOL-GEL-VERFAHREN ERHALTENEN KOHLENSTOFFAUSSENSCHICHT
COATING OF A METAL SUBSTRATE WITH A CARBON OUTER LAYER OBTAINED BY THE SOL-GEL METHOD

(30) Priorité: 29.06.2022 BE 202205526
(43) Date de publication de la demande: 07.05.2025
(73) Titulaire: Centre de Recherches Métallurgiques ASBL - Centrum voor Research in de Metallurgie VZW, 1000 Bruxelles (BE)
(72) Inventeur: LE CRAZ, Sébastien, 4000 Liege (BE); LAFORT, Adeline, 4910 Theux (BE)
(74) Mandataire: AWA Benelux
(86) Numéro de dépôt international: PCT/EP2023/066140
(87) Numéro de publication internationale: WO 2024/002713

(56) Documents cités:
- EP-A2- 2 234 192
- WO-A1-2020/025276
- US-A1- 2004 091 768
- US-A1- 2010 273 095
- US-A1- 2018 355 207

## Description

### Objet de l'invention

La présente invention se rapporte à un procédé pour réaliser un revêtement carboné sur un substrat métallique, ladite couche externe de revêtement étant conductrice et résistante à la corrosion.

L'invention se rapporte également au revêtement et au substrat revêtu obtenus pour des applications de revêtement d'éléments de piles à combustible, d'absorbeurs solaires ou de batteries, ainsi qu'à la méthode d'obtention du revêtement.

### Arrière-plan technologique et état de la technique

Les plaques bipolaires constituent un composant clé et multifonctionnel dans les cellules électrolytiques (ou piles à combustible) à membrane échangeuse de protons (PEMFC), en particulier à destination de l'industrie automobile. Il est requis que les matériaux utilisés dans les plaques bipolaires aient une excellente résistance à la corrosion dans un environnement présentant beaucoup de vapeur d'eau, d'eau condensée et des ions acides issus de la décomposition de la membrane, en combinaison avec des températures pouvant atteindre 70 à 80°C.

Le matériau le plus couramment utilisé pour les plaques bipolaires est un graphite non poreux qui présente une résistivité thermique et chimique élevée, une haute conductivité électrique mais une faible résistance mécanique (cassant), ainsi qu'une utilisation en épaisseurs élevées. On utilise également des matériaux composites, légers, mais souvent faiblement conducteurs, de faible résistance mécanique et coûteux. Il peut s'agir de composites carbonés, un polymère servant de liant et procurant résistance mécanique et imperméabilité aux gaz, tandis que la charge carbonée, notamment sous forme de noir de carbone, de fibres de carbone, de particules de graphite ou de nanotubes de carbone, assure le chemin de passage pour les électrons et la chaleur.

On s'est également intéressé, dans le cas des plaques bipolaires, aux matériaux métalliques qui ont des propriétés mécaniques et physiques supérieures (usinabilité, conductivité électrique et thermique, imperméabilité aux gaz) et sont moins coûteux. Cependant ceux-ci ont le désavantage de présenter une résistance faible à la corrosion. En effet, une telle résistance est impérative du fait de l'environnement humide à haute température et bas pH, par exemple suite à la dégradation des membranes électrolytiques polymère, par ex. de type Nafion^{™}, qui libèrent de l'acide sulfurique en se dégradant.

Ainsi, le titane massif peut être utilisé mais celui-ci s'oxyde, ce qui augmente la résistance de contact dans les conditions de fonctionnement d'une pile à combustible.

De plus, la réalisation de canaux de flux dans les plaques bipolaires par usinage, décapage ou emboutissage est aisée et économique dans le cas des plaques métalliques.

Afin de prévenir la corrosion sur un substrat métallique, tel que l'aluminium, l'acier inoxydable ou le titane, exposé à l'humidité et à un environnement acide, lors du fonctionnement à long terme en pile à combustible, il est connu d'appliquer des revêtements au moyen de techniques conventionnelles ou de haute technologie, telles que chimie ou électrochimie, traitement thermique, implantation d'ions, pulvérisation, dépôt physique en phase vapeur (PVD) ou chimique en phase vapeur (CVD). Ces revêtements peuvent être des métaux nobles, à base de carbone ou des composites C/polymère.

Les paramètres de choix pour déterminer la qualité du revêtement sont la résistance de contact interfaciale (ICR) et la densité de courant de corrosion (voir par exemple Tableau 1 dans Nur Fawwaz Asri et al., Coating of stainless steel and titanium bipolar plates for anticorrosion in PEMFC : A review, Int. J. of Hydrogen Energy 42 (2017) 9135-9148 (Elsevier)).

Notamment, on trouve dans l'état de l'art des revêtements d'acier inox 304, 316 ou 316L sous forme de carbures de chrome ou de niobium, de nitrures de titane, parfois multicouches, pouvant notamment se trouver sous la valeur cible de l'US Department of Energy (DOE) pour l'ICR de 10mΩ.cm² à une pression de compaction de 100N/cm².

Nous renvoyons également le lecteur à la référence bibliographique : Yun Wang et al., Materials, technological status, and fundamentals of PEM fuel cells - A review, Materials Today, vol. 32, Jan/Feb 2020, 178-203 (Elsevier).

Le document WO2021/014144A1 divulgue un revêtement pour plaque de pile à combustible, pouvant être un substrat en inox/titane/aluminium, comprenant une couche nanométrique résistante à la corrosion (oxyde ou nitrure de Ti, Zr, Nb) et/ou une couche de carbone, graphène ou graphite. La (ou les) couche(s) est (sont) déposée(s) par pulvérisation cathodique. La résistance interfaciale de contact (ICR) de la couche est < 15 (de préférence 5) mΩ.cm².

Le document US2015037710A1 divulgue une plaque utilisable dans une pile à combustible constituée d'une matière conductrice avec un revêtement sous forme de nanocouche externe conductrice (carbone) et une nanocouche intermédiaire conductrice de nitrure/carbure/carbo-nitrure. Les nanocouches sont déposées par pulvérisation cathodique (ou magnétron). L'ICR de la couche intermédiaire est < 25 (de préférence 15) mOhm cm² et l'ICR de la couche carbone est < 15 mΩ.cm².

Le document WO2022013317A1 divulgue une plaque bipolaire en inox pour pile à combustible revêtue d'une couche de germe de titane, d'une couche interfaciale de nitrure de titane et d'une couche supérieure de carbone amorphe. On donne des valeurs ICR <5 mΩ.cm². Les couches submicrométriques sont obtenues par CVD ou dépôt d'arc cathodique sous vide (FCVA).

Le document US2014227631A1 divulgue une méthode de fabrication d'un revêtement sur inox pour plaque bipolaire de pile à combustible : décapage, dépôt d'une nanocouche de nitrure (CrN, TiN) et dépôt d'une nanocouche de carbone conductrice. La technique de revêtement est le PVD ou PECVD.

Le document US2004091768A1 divulgue une plaque conductrice de distribution de fluide en inox (avec couche de passivation) comprenant un revêtement micrométrique de graphite et noir de carbone avec un liant. Le liant peut être une résine polymère et le revêtement peut être appliqué, par exemple sous forme de gel, par n'importe quel procédé approprié tel que le laminage (par exemple à chaud), le brossage, la pulvérisation, l'étalement (tel qu'avec une racle) et la sérigraphie.

### Buts de l'invention

La présente invention vise à fournir un revêtement carboné sur acier inoxydable, pouvant être utilisé dans les plaques bipolaires de piles à combustible, ayant les propriétés d'être bon conducteur électrique (ICR<10 Ohm/cm²), d'avoir une bonne résistance à la corrosion en milieu humide et acide, en présence d'air et d'un potentiel électrique, de protéger le substrat métallique faisant barrière à l'eau et l'oxygène pour qu'il reste conducteur en surface, d'être déformable (pour la formation de canaux dans une presse) et d'être applicable par enduction au rouleau ou par spray sur ligne industrielle.

La présente invention vise également à fournir un revêtement carboné sur aluminium, cuivre, acier carbone, acier galvanisé ou inoxydable, pouvant être utilisé dans un absorbeur solaire thermique ayant les propriétés d'être absorbant solaire (absorbance solaire totale > 95% dans la globalité du spectre IR, visible et UV, de tenir en température (par ex. 250°C pic en surface), de tenir en environnement extérieur (humidité, température, UV) et d'être applicable par pulvérisation sur surface 3D.

La présente invention vise également à fournir un revêtement carboné sur aluminium, cuivre ou acier inoxydable, pouvant être utilisé comme protection d'un collecteur de courant de batterie ayant les propriétés d'être bon conducteur électrique, de rester conducteur en dépit du potentiel électrique, de la présence de sels et d'espèces oxydantes, de protéger le métal pour qu'il reste conducteur en surface (effet barrière) et enfin d'être applicable par enduction au rouleau ou par pulvérisation.

Un but de l'invention est de pouvoir réaliser les revêtements ci-dessus de manière moins coûteuse que dans l'état de la technique, qui fait la part belle aux techniques de pulvérisation sous vide.

### Principaux éléments caractéristiques de l'invention

Le revêtement carboné selon la présente invention est obtenu grâce à la méthode sol-gel (pour solution-gélification) qui va permettre de réaliser un revêtement solide en film très résistant incorporant des particules de carbone nanométriques ou micrométriques. Les réactions chimiques à la base du procédé sont déclenchées lorsque les précurseurs en solution, par exemple des alkoxydes de silicium, sont mis en présence d'eau et d'acide : une hydrolyse des précurseurs intervient dans un premier temps, suivie d'une condensation des hydrolysats et une polycondensation conduisant à la gélification. La polymérisation va conduire à la formation d'un réseau dense de liaisons siloxane Si-O-Si avec incorporation de particules carbonées qui vont conférer des propriétés de conduction et de résistance à la corrosion au substrat. La gélification peut se produire sur des temps très longs, ce qui assure la stabilité du produit même après plusieurs semaines ou mois.

Les précurseurs utilisés dans le cadre de la présente invention sont de préférence des composés organosiliciques tels que des trialkoxysilanes, éventuellement en combinaison avec des tétraalkoxysilanes.

Le trialkoxysilane peut être un alkyltrialkoxysilanes et de préférence être sélectionné dans le groupe constitué de méthyltrialkoxysilane, éthyltrialkoxysilane, propyltrialkoxysilane, n-butyltrialkoxysilane, isobutyltrialkoxysilane, n-hexyltrialkoxysilane, phényltrialkoxysilane, cyclohexyltrialkoxysilane, cyclopentyltrialkoxysilane, (3,3-diméthylbutyl)trialkoxysilane, phénéthyltrialkoxysilane, hexadécyltrialkoxysilane, isooctyltrialkoxysilane, n-octyltrialkoxysilane, n-décyltrialkoxysilane, n-dodécyltrialkoxysilane, n-octadécyltrialkoxysilane, p-tolyltrialkoxysilane, vinyltrialkoxysilane, allyltrialkoxysilane et leurs mélanges, mais sans se limiter à ces composés.

Le trialkoxysilane peut être également sélectionné dans le groupe constitué de méthyltriméthoxysilane, éthyltriméthoxysilane, propyltriméthoxysilane, n-butyltriméthoxysilane, isobutyltriméthoxysilane, n-hexyltriméthoxysilane, phényltriméthoxysilane, cyclohexyltriméthoxysilane, cyclopentyltriméthoxysilane, (3,3-diméthylbutyl)triméthoxysilane, phénéthyltriméthoxysilane, hexadécyltriméthoxysilane, isooctyltriméthoxysilane, n-octyltriméthoxysilane, n-décyltriméthoxysilane, n-dodécyltriméthoxysilane, n-octadécyltriméthoxysilane, p-tolyltriméthoxysilane, vinyltriméthoxysilane, allyltriméthoxysilane et leurs mélanges, mais sans se limiter à ces composés.

Le tétraalkoxysilane peut être le tétraméthoxysilane, le tétraéthoxysilane, le tétrapropoxysilane ou le tétrabutoxysilane par exemple.

Selon l'invention, les particules carbonées incorporées au revêtement obtenu par sol-gel sont un mélange de particules nanométriques (ex. noir de carbone) ou micrométriques (ex. graphite). Le substrat, tel que l'acier inoxydable ou l'aluminium, est naturellement oxydé. Il va être revêtu d'abord d'une couche intermédiaire nanométrique d'un métal sélectionné dans le groupe constitué de Ti, Ta, Nb, TiTa, TiNb, TaNb, TiW, W et Cr, qui va s'oxyder beaucoup moins rapidement et en plus fine épaisseur tout en étant plus stable en particulier en milieu acide. La couche intermédiaire sera ensuite revêtue d'une couche carbonée qui ne s'oxyde pas dans le domaine de fonctionnement usuel d'une pile ou batterie, et qui va garantir une bonne conductivité intrinsèque et de contact. Cette couche externe va apporter une protection supplémentaire au substrat et à la couche intermédiaire.

Un premier aspect de la présente invention se rapporte à un procédé pour réaliser un revêtement carboné sur un substrat métallique, de préférence à destination de la réalisation de plaques bipolaires pour piles à combustible à membrane échangeuse de protons, d'absorbeurs solaires thermiques ou de couches de protection de collecteurs de courant métalliques dans des batteries, avec une résistance de contact interfaciale (ICR) du substrat revêtu visée inférieure à 10mΩ.cm², à une force de compaction de 100Ncm⁻², ledit substrat métallique étant sélectionné dans le groupe constitué de l'acier inoxydable, l'acier carbone, l'acier galvanisé, du cuivre et de l'aluminium, comprenant les étapes de :
- dépôt sur ledit substrat métallique d'au moins une couche mince métallique intermédiaire ayant une épaisseur inférieure à 100nm ;
- dépôt d'une couche externe carbonée conductrice d'épaisseur finale sèche comprise entre 1 et 50µm, obtenue par procédé sol-gel, la composition sol pour la réalisation de la couche externe carbonée comprenant des particules de noir de carbone amorphe, de graphite, du graphène, des fibres de carbone et/ou des nanotubes de carbone caractérisé en ce que la couche mince intermédiaire est sélectionnée dans le groupe constitué de Ti, Ta, Nb, TiTa, TiNb, TaNb, TiW, W et Cr.

Selon des formes d'exécution préférées de l'invention, le procédé est limité selon le cas par au moins une des caractéristiques suivantes ou par une combinaison appropriée de plusieurs d'entre elles :
- la couche intermédiaire a une épaisseur comprise entre 20 et 50nm ;
- le substrat en acier inoxydable est du type AISI 304, 316, 316L, 316Ti ou 321 ;
- le substrat métallique subit une étape de décapage sous vide avant le dépôt de la couche mince métallique intermédiaire ou de la couche externe carbonée selon le cas ;
- la couche mince intermédiaire est obtenue par pulvérisation cathodique sous vide ou PVD ;
- ladite composition sol carbonée est appliquée sur le substrat métallique revêtu ou non d'une couche mince métallique intermédiaire par voie liquide pendant un temps inférieur à 1sec, par enduction au rouleau, par fente de liquide, par spray humide, par revêtement au trempé ou revêtement par centrifugation, ladite application étant suivie d'une cuisson consistant en un séchage par convexion de 30 sec à 2 min à 200-250°C .

Un deuxième aspect de l'invention se rapporte à un substrat métallique revêtu obtenu par un des procédés décrits ci-dessus.

Selon des formes d'exécution préférées du procédé selon l'invention, la composition sol pour réaliser la couche externe carbonée comprend de préférence :
- 10 à 30%, en poids de la composition sol, d'au moins un précurseur comprenant un trialkoxysilane éventuellement en combinaison avec un tétraalkoxysilane ;
- 5 à 60%, en poids de la composition sol, d'un solvant capable de rendre le précurseur miscible dans l'eau ;
- 30 à 60%, en poids de la composition sol, d'une dispersion de particules carbonées dans ledit solvant comprenant un surfactant, la dispersion comprenant 15 à 60%, en poids de la dispersion, de particules de noir de carbone et de graphite ;
- 5 à 15% en poids d'eau ;
- 0,1 à 2%, en poids de la composition sol, d'un catalyseur acide.

Selon des formes d'exécution préférées, la composition sol est limitée par au moins une des caractéristiques suivantes ou par une combinaison appropriée de plusieurs d'entre elles :
- le trialkoxysilane est sélectionné dans le groupe constitué des alkyltrialkoxysilanes ;
- le trialkoxysilane est sélectionné dans le groupe constitué de méthyltrialkoxysilane, éthyltrialkoxysilane, propyltrialkoxysilane, n-butyltrialkoxysilane, isobutyltrialkoxysilane, n-hexyltrialkoxysilane, phényltrialkoxysilane, cyclohexyltrialkoxysilane, cyclopentyltrialkoxysilane, (3,3-diméthylbutyl)trialkoxysilane, phénéthyltrialkoxysilane, hexadécyltrialkoxysilane, isooctyltrialkoxysilane, n-octyltrialkoxysilane, n-décyltrialkoxysilane, n-dodécyltrialkoxysilane, n-octadécyltrialkoxysilane, p-tolyltrialkoxysilane, vinyltrialkoxysilane, allyltrialkoxysilane et leurs mélanges ;
- le trialkoxysilane est sélectionné dans le groupe constitué de méthyltriméthoxysilane, éthyltriméthoxysilane, propyltriméthoxysilane, n-butyltriméthoxysilane, isobutyltriméthoxysilane, n-hexyltriméthoxysilane, phényltriméthoxysilane, cyclohexyltriméthoxysilane, cyclopentyltriméthoxysilane, (3,3-diméthylbutyl)triméthoxysilane, phénéthyltriméthoxysilane, hexadécyltriméthoxysilane, isooctyltriméthoxysilane, n-octyltriméthoxysilane, n-décyltriméthoxysilane, n-dodécyltriméthoxysilane, n-octadécyltriméthoxysilane, p-tolyltriméthoxysilane, vinyltriméthoxysilane, allyltriméthoxysilane et leurs mélanges ;
- le solvant est sélectionné parmi les alcools, les cétones, les acétates et leurs mélanges ;
- le catalyseur acide est un acide minéral comme par exemple l'acide chlorhydrique, nitrique, sulfurique, phosphoreux ou phosphorique, ou un acide organique comme par exemple l'acide formique, acétique, citrique, lactique, oxalique, tartrique ou ascorbique ;
- la taille moyenne des particules de noir de carbone est de l'ordre de 5 à 100nm selon ASTM D3849 ;
- la taille moyenne des particules de graphite est de l'ordre de 2 à 10µm et/ou la distribution de taille des particules de graphite D90, respectivement D50, est en dessous de 5µm, respectivement 2,5µm.

Un troisième aspect de l'invention se rapporte à l'utilisation du substrat revêtu comme précédemment, pour la réalisation de plaques bipolaires de piles à combustible à membrane échangeuse de protons.

Un quatrième aspect de l'invention se rapporte à l'utilisation du substrat revêtu comme précédemment, pour la réalisation d'absorbeurs solaires thermiques.

Un cinquième aspect de l'invention se rapporte à l'utilisation du substrat revêtu comme précédemment, pour la réalisation de couches de protection de collecteurs de courant métalliques dans les batteries.

### Brève description des figures

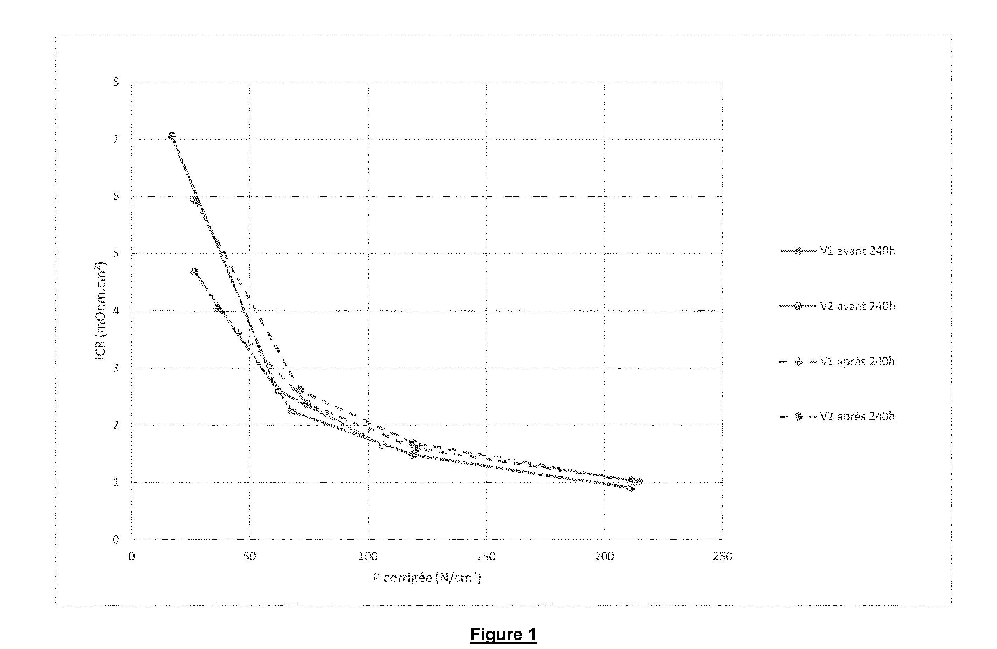

La figure 1 montre le résultat du test de résistance à la corrosion pour une plaque de substrat inox revêtue par une couche externe carbonée selon la présente invention.

### Description de formes d'exécution préférées de l'invention

### Compositions sol

### EXEMPLE 1 : pile à combustible (plaque bipolaire)

Une composition sol a été préparée par mélange de trois précurseurs trialkoxysilanes, à savoir 8,33g de triméthoxyméthylsilane, 8,33g de triméthoxyphénylsilane et 8,33g de triméthoxypropylsilane avec 3,25g de solvant (1-Méthoxy-2-propyl) acétate.

Ce premier prémélange a été hydrolysé pendant une heure en ajoutant 0,06g HCl (catalyseur) et 11ml d'eau.

Dans un second prémélange, une poudre carbonée comprenant du noir de carbone amorphe (7,5g de NanoC (Printex^{®} G)) et du graphite (4g graphite TIMREX^{®} KS4) a été ajoutée à 50g du solvant précité contenant un additif mouillant et dispersant (surfactant), Byk^{®}9077 (0,8g).

Un mélange complémentaire de solvant (5g) et d'acide chlorhydrique (0,18g HCl37%) a été préparé.

Le premier prémélange et le second prémélange ont été mélangés avec un disperseur Ultra-Turrax^{®} de 3000 à 8000 tours/min pendant 1min, avec ajout du mélange complémentaire de solvant et d'acide chlorhydrique et en mélangeant encore 30s.

### EXEMPLE 2 : absorbeur solaire

Une composition sol a été préparée par mélange de deux précurseurs trialkoxysilanes, à savoir 12,5g de triméthoxyméthylsilane et 12,5g de triméthoxyphénylsilane avec 3,25g de solvant (1-Méthoxy-2-propyl) acétate.

Le premier prémélange a été hydrolysé pendant une heure en ajoutant 0,06g HCl et 11ml d'eau.

Dans un second prémélange, une poudre de noir de carbone amorphe (6g de NanoC (Printex^{®} G)) a été ajoutée à 50g du solvant précité contenant un additif mouillant et dispersant (surfactant), Byk^{®}9077 (0,8g).

Le premier prémélange et le second prémélange ont été mélangés avec un disperseur Ultra-Turrax^{®} de 3000 à 12000 tours/min pendant 1min.

### EXEMPLE 3 : collecteur de courant de batterie

Une composition sol a été préparée par mélange de deux précurseurs trialkoxysilanes, à savoir 12,5g de triméthoxyméthylsilane et 12,5g de triméthoxyphénylsilane avec 3,25g de solvant (1-Méthoxy-2-propyl) acétate.

Ce premier prémélange a été hydrolysé pendant une heure en ajoutant 0,06g HCl et 11ml d'eau.

Dans un second prémélange, une poudre carbonée comprenant du noir de carbone amorphe (6,5g de NanoC (Printex^{®} G)) et du graphite (4g graphite TIMREX^{®} KS4) ont été ajoutés à 50g du solvant précité contenant un additif mouillant et dispersant (surfactant), Byk^{®}9077 (0,8g).

Un mélange complémentaire de solvant (5g) et d'acide chlorhydrique (0,18g HCl37%) a été préparé.

Le premier prémélange et le second prémélange ont été mélangés avec un disperseur Ultra-Turrax^{®} de 3000 à 12000 tours/min pendant 1min, avec ajout du mélange complémentaire de solvant et d'acide chlorhydrique, et en mélangeant encore 30s.

### Application de la composition sol sur le substrat

Toutes les compositions ont été appliquées par voie liquide, soit par enduction au rouleau, soit par fente de liquide (slot die), par spray humide, revêtement au trempé (dip coating), ou encore revêtement par centrifugation (spin coating), sur bande, plaque métallique ou forme 3D complexe (par exemple une cassette déjà emboutie dans le cas d'un absorbeur solaire).

Pour la plaque bipolaire (pile à combustible), l'épaisseur était de 10 à 50µm, de préférence 25µm humide (soit 4-5µm sec) sur inox 316L avec sous-couche 40-50nm Ti déposée sous vide par PVD après un etching classique.

Pour l'absorbeur solaire, l'épaisseur était de 10 à 50µm humide, de préférence 25µm humide (soit 4-5µm sec) sur aluminium, cuivre, acier carbone, acier galvanisé, inox 304 ou 316.

Pour le collecteur de courant de batterie, l'épaisseur humide était de 5 à 10µm humide (soit 1-2µm.sec) sur aluminium, cuivre ou inox.

Le temps d'application est inférieur à 1 sec. La cuisson est un séchage par convexion, infrarouge ou induction (si le substrat le permet) de 30 sec à 2 min à une température de substrat (PMT pour *Peak Metal Temperature*) de 200 à 250°C. Un séchage à plus basse température peut également être envisagé mais bien sûr avec des temps plus longs.

Pour la plaque bipolaire, des canaux ont été réalisés par emboutissage hydraulique. La séquence de fabrication est : application au rouleau enducteur puis formage et perçage des différents trous.

Dans le cas de l'absorbeur solaire, le revêtement carboné a été appliqué par technologie de spray électrostatique 3D (peinture, sol-gel). La séquence de fabrication est : formage, soudage et revêtement en spray industriel. On obtient : α>0,97 et ε>0,8.

Les échantillons finaux obtenus après cuisson se composent respectivement :
- d'un substrat inox 316L avec un fini de surface lisse, avec ajout d'une sous-couche de 40nm de titane par PVD et enfin d'une couche externe de 3-5µm de la composition sol correspondante ;
- d'un substrat de type construction (ex. aluminium, cuivre, acier carbone, acier galvanisé, inox 304 ou 316) avec une couche externe de 5µm de la composition sol ci-dessus ;
- d'un substrat aluminium, cuivre ou inox avec une couche externe de 1-2µm de la composition sol ci-dessus.

### Tests

### 1. Méthodes de mesure utilisées pour les piles à combustible

La résistance de contact interfaciale (ICR) entre la plaque bipolaire (PB) et la couche de diffusion gazeuse (GDL) a été mesurée par la méthode potentiostatique sous courant en mode DC avec une pression de 100N/cm⁻².

La résistance à la corrosion a été évaluée en appliquant des potentiels allant de 0,8V à 1,4V par rapport à une électrode de référence Ag/AgCl pendant 6h à 80°C, dans une solution 0,5M de H₂SO₄ et caractérisation des ICRs après le test.

La résistance à l'eau a été testée à 90°C pendant 1000h par immersion des plaques. Une inspection visuelle de l'état de surface et de l'adhérence a été menée périodiquement. De même, un contrôle de l'ICR des échantillons a été réalisé à différents temps pendant ce long test pour voir si celle-ci évoluait.

La capacité de déformation des revêtements ainsi réalisés a été évaluée par déformation biaxiale au moyen de la méthode de Marciniak (Z. Marciniak, K. Kuczynski et T. Pokora. "Influence of the plastic properties of a material on the forming limit diagram for sheet metal in tension". Int. Journal of Mechanical Sciences Vol. 15(10), 789-800, 1973). Sur la surface plane, au centre du Marciniak, des mesures d'ICR ont été mesurées. Pour confirmer les tendances, des essais de réalisation de canaux dans la plaque bipolaire par déformation sous presse hydraulique ou presse d'hydroformage ont encore été menés.

Un test en pile à combustible (un seul « stack ») a été réalisé pendant 240h à partir de plaques réalisées par presse hydraulique. Des mesures d'ICR sous différentes pressions ont été réalisés sur ces échantillons avec canaux avant et après test en pile.

### 2. Méthodes de mesure utilisées pour les absorbeurs solaires

L'absorbance solaire totale a été mesurée grâce à un spectromètre UV-Visible (intervalle de longueur d'onde de 300nm à 2500nm). L'émissivité a été mesurée par un spectromètre infra-rouge couplée à une sphère dorée.

Des tests de durabilité ont été réalisés : brouillard salin neutre (selon normes ISO9227 et EN13523-8), test de condensation QCT (selon normes ISO6270-1 et EN13523-10) et QUV (selon normes IS4892-1 et EN13523-10).

### 3. Méthode de mesure utilisées pour les électrodes pour batteries au Li-ion.

Des méthodes électrochimiques de caractérisation ont été utilisées sur des dépôts sol-gel carbonés déposés sur foil d'aluminium. Le système complet était :
- Anode (Electrode de référence + contre-électrode) : feuilles de lithium (pastilles Li pour batteries roulées) ;
- Electrolyte : LiPF6 (électrolyte commun pour batterie liquide Li-Ion) ;
- Cathode (Electrode de travail) : aluminium revêtu ou non de sol-gel carboné ;
- Cellule de corrosion : *Biologic Plate Material Evaluating Cell* (originale et modifiée) d'1cm² ;
- Potentiostat : Metrohm - Autolab PGSTAT301 N.

Des cyclages par balayage en potentiel par rapport au Li⁺/Li ont été réalisés pour évaluer le domaine de stabilité et la durabilité des couches sol-gel carbonées. Ceci a été réalisé en pile bouton avec électrolyse liquide ou en cellule électrochimique adaptée dans une boîte à gants sous azote.

Des tests électrochimiques à potentiel fixe ont été réalisés pour estimer le courant de corrosion sans et avec couche sol-gel.

Des tests de spectroscopie d'impédance électrochimiques ont été menés avec la cellule de corrosion précitée.

Des mesures d'ICR ont été réalisés pour évaluer le passage de courant au travers de la couche sol-gel, comme pour les piles à combustible.

### Développement de plaque bipolaire

L'échantillon se compose d'un substrat inox 316L 0,1mm, avec état de surface très lisse (sans griffures), d'une sous-couche Ti 50nm et d'une couche sol-gel selon le protocole pour plaque bipolaire comme décrit ci-dessus.

Le test de corrosion a été réalisé dans les conditions de potentiel du Tableau 1 en milieu 0.5M H₂SO₄ à 80°C pendant 6h.

**Tableau 1**

| | | ICR (mΩ.cm²) | | | |
|---|---|---|---|---|---|
| Potentiel (V) | Avant test | 0,8 | 1 | 1,2 | 1,4 |
| Echantillon | 13 | 14 | 18 | 37 | 110 |

Le test de résistance à l'eau a été réalisé par immersion pendant 1000h à 90°C.

**Tableau 2**

| | ICR (mΩ.cm²) | | | |
|---|---|---|---|---|
| Temps d'immersion (heures) | 0 | 300 | 700 | 1000 |
| Echantillon#1 | 13 | 31 | 27 | 23 |
| Echantillon#2 | 16 | 49 | 44 | 45 |

Un test de déformation biaxiale de Marciniak (20%-5%) a enfin été réalisé.

Aucune délamination n'a été observée après les tests de corrosion, de résistance à l'eau et de déformation.

La figure 1 montre les résultats du test d'ICR réalisé sur une plaque revêtue d'anode (V1), de cathode (V2) respectivement. L'ICR reste inchangée après les 240h en pile, peu importe la pression imposée lors du test d'ICR.

### Développement d'absorbeur solaire

L'échantillon se compose d'un substrat inox 316L 0,8mm et d'une couche sol-gel selon le protocole pour absorbeur solaire comme décrit ci-dessus.

Des tests de durabilités ont été menés avec les résultats suivants :
- brouillard salin neutre pendant 360h : aucun changement d'aspect, cloquage ou décollement de la couche sol-gel déposée. Les valeurs d'absorbance ne changent pas ;
- test de condensation QCT pendant 500h : aucun changement d'aspect, cloquage ou décollement de la couche sol-gel déposée. Les valeurs d'absorbance ne changent pas ;
- test QUV pendant 2000h : aucune perte de brillance mesurée. Les valeurs d'absorbance ne changent pas.

### Développement de couches protectrices pour collecteur de courant métallique pour batteries

Les couches sol-gel carbonées sont, comme pour les piles à combustibles, de bonnes candidates pour protéger les collecteurs de courant que sont des feuillards d'aluminium, d'acier inoxydable ou de cuivre. Elles sont à la fois conductrices électriques et barrière à l'électrolyte liquide.

Des mesures de voltamétrie cyclique ont permis de montrer que ces couches sont stables dans un domaine de tension >4V par rapport au lithium. De ce fait, il est possible de d'insérer celles-ci dans une batterie au lithium sans diminuer la tension maximum de travail de la cellule.

De même au niveau du courant, grâce à la spectroscopie d'impédance, il a été démontré que ces couches sol-gel avait une résistivité comparable avec les couches 100% carbonées commerciales. Ainsi, pour une couche sol-gel selon le protocole de formulation de l'exemple 3 avec une épaisseur de 1µm sec, il a été démontré que sa résistance (mesure donc selon la direction collecteur de courant 1 vers collecteur de courant 2) tournait autour de 1000 Ohm (avec la cellule de 1cm²).

Il a aussi été démontré qu'avec l'électrolyte liquide LiPF6, cette conductivité restait la même après des cycles à 4V. La fonction de protection est alors démontrée.

### Abréviations

- PEMFC: Pile à combustible à membrane échangeuse de protons
- PVD: Dépôt physique en phase vapeur
- CVD: Dépôt chimique en phase vapeur
- ICR: Résistance de contact interfaciale
- PMT: Température de métal au pic
- PB: Plaque bipolaire
- GDL: Couche de diffusion gazeuse
- QCT: Condensing humidity tester
- QUV: Accelerated weathering tester

## Revendications

1. Procédé pour réaliser un revêtement carboné sur un substrat métallique, à destination de plaques bipolaires de piles à combustible à membrane échangeuse de protons, d'absorbeurs solaires thermiques ou de couches de protection de collecteurs de courant métalliques dans des batteries, avec une résistance de contact interfaciale (ICR) du substrat revêtu inférieure à 10mΩ.cm², à une force de compaction de 100Ncm⁻², ledit substrat métallique étant sélectionné dans le groupe constitué de l'acier inoxydable, l'acier carbone, l'acier galvanisé, du cuivre et de l'aluminium, comprenant les étapes de :
- dépôt sur ledit substrat métallique d'au moins une couche mince métallique intermédiaire ayant une épaisseur inférieure à 100nm ;
- dépôt d'une couche externe carbonée conductrice d'épaisseur finale sèche comprise entre 1 et 50µm, obtenue par procédé sol-gel, la composition sol pour la réalisation de la couche externe carbonée comprenant des particules de noir de carbone amorphe, de graphite, du graphène, des fibres de carbone et/ou des nanotubes de carbone ;
**caractérisé en ce que** la couche mince intermédiaire est sélectionnée dans le groupe constitué de Ti, Ta, Nb, TiTa, TiNb, TaNb, TiW, W et Cr.

2. Procédé selon la revendication 1, **caractérisé en ce que** la couche intermédiaire a une épaisseur comprise entre 20 et 50nm.

3. Procédé selon la revendication 1, **caractérisé en ce que** le substrat en acier inoxydable est du type AISI 304, 316, 316L, 316Ti ou 321.

4. Procédé selon la revendication 1, **caractérisé en ce que** le substrat métallique subit une étape de décapage sous vide avant le dépôt de la couche mince métallique intermédiaire.

5. Procédé selon la revendication 1, **caractérisé en ce que** la couche mince intermédiaire est obtenue par pulvérisation cathodique sous vide ou PVD.

6. Procédé selon la revendication 1, **caractérisé en ce que** ladite composition sol carbonée est appliquée sur le substrat métallique revêtu ou non d'une couche mince métallique intermédiaire par voie liquide pendant un temps inférieur à 1sec, par enduction au rouleau, par fente de liquide, par spray humide, par revêtement au trempé ou revêtement par centrifugation, ladite application étant suivie d'une cuisson consistant en un séchage par convexion de 30 sec à 2 min à 200-250°C.

7. Substrat métallique revêtu obtenu par le procédé selon l'une quelconque des revendications précédentes.

8. Utilisation du substrat revêtu selon la revendication 7, pour la réalisation de plaques bipolaires de piles à combustible à membrane échangeuse de protons.

9. Utilisation du substrat revêtu selon la revendication 7, pour la réalisation d'absorbeurs solaires thermiques.

10. Utilisation du substrat revêtu selon la revendication 7, pour la réalisation de couches de protection de collecteurs de courant métalliques dans les batteries.

## Patentansprüche

1. Eine Methode zur Herstellung einer kohlenstoffhaltigen Beschichtung auf einem Metallsubstrat, für den Einsatz in bipolaren Platten von Protonenaustauschmembran-Brennstoffzellen, solarthermischen Absorbern oder Schutzschichten von Metallstromsammlern in Batterien, mit einem Zwischenflächenkontaktwiderstand (ICR) des beschichteten Substrats von weniger als 10 mΩ,cm² bei einer Verdichtungskraft von 100 Ncm-2wobei das genannte Metallsubstrat aus der Gruppe aus Edelstahl, Kohlenstoffstahl, verzinktem Stahl, Kupfer und Aluminium ausgewählt wird und die folgenden Schritte umfasst:
- Abscheidung von mindestens einer intermediären metallischen Dünnschicht mit einer Dicke von weniger als 100 nm auf diesem Metallsubstrat;
- Ablagerung einer leitfähigen, kohlenstoffhaltigen Außenschicht mit einer trockenen Enddicke zwischen 1 und 50 µm, die durch Sol-Gel-Verfahren gewonnen wird, die Bodenzusammensetzung für die Herstellung der kohlenstoffhaltigen Außenschicht, die aus amorphen Schwarzkohlen, Graphit, Graphen, Kohlenfasern und/oder Kohlenstoffnanoröhren besteht;
gekennzeichnet darin, dass der intermediäre Dünnfilm aus der Gruppe aus Ti, Ta, Nb, TiTa, TiNb, TaNb, TiW, W und Cr ausgewählt wird.

2. Eine Methode nach Anspruch 1, die **dadurch gekennzeichnet ist, dass** die Zwischenschicht eine Dicke zwischen 20 und 50 nm hat.

3. Ein Verfahren gemäß Anspruch 1, **gekennzeichnet dadurch, dass** das Edelstahlsubstrat vom AISI-Typ 304, 316, 316L, 316Ti oder 321 ist.

4. Eine Methode nach Anspruch 1, die **dadurch gekennzeichnet ist, dass** das Metallsubstrat vor der Ablagerung der intermediären metallischen dünnen Schicht einen Vakuumbeizungsschritt durchläuft.

5. Eine Methode nach Anspruch 1, die **dadurch gekennzeichnet ist, dass** der intermediäre Dünnfilm durch Vakuumsputtern oder PVD gewonnen wird.

6. Ein Verfahren gemäß Anspruch 1, das darin gekennzeichnet ist, dass die genannte kohlenstoffhaltige Sol-Zusammensetzung auf das Metallsubstrat aufgetragen wird, unabhängig davon, ob mit einer intermediären metallischen dünnen Schicht beschichtet oder nicht, flüssig für eine Zeit von weniger als 1 Sekunde, durch Walzenbeschichtung, durch Flüssigkeitsspaltung, durch Nasssprüh, durch Abschreckbeschichtung oder Zentrifugalbeschichtung, gefolgt von einer Brennung, die aus Konvektionstrocknung von 30 Sekunden bis 2 Minuten bei 200-250° bestehtC.

7. Ein beschichtetes Metallsubstrat, das durch das Verfahren gemäß einer der vorangegangenen Behauptungen gewonnen wurde.

8. Die Verwendung des beschichteten Substrats gemäß Behauptung 7 zur Realisierung bipolarer Platten von Protonenaustauschmembran-Brennstoffzellen.

9. Verwendung des beschichteten Substrats gemäß Claim 7 zur Herstellung von solarthermischen Absorbern.

10. Verwendung des beschichteten Substrats gemäß Anspruch 7 zur Herstellung von Schutzschichten aus Metallstromaufnehmern in Batterien.

## Claims

1. A method for making a carbon coating on a metal substrate, intended for bipolar plates of fuel cells with proton exchange membrane, thermal solar absorbers or protective layers of metal current collectors in batteries, with an interfacial contact resistance (ICR) of the coated substrate of less than 10mΩ.cm², at a compaction force of 100Ncm⁻², said metal substrate being selected from the group consisting of stainless steel, carbon steel, galvanized steel, copper and aluminum, comprising the steps of:
- depositing onto said metal substrate at least one thin metal interlayer having a thickness of less than 100nm;
- depositing a conductive carbon outer layer with a dry final thickness of between 1 and 50µm, obtained by the sol-gel method, the sol composition for making the carbon outer layer comprising particles of amorphous carbon black, graphite, graphene, carbon fibres and/or carbon nanotubes;
**characterized in that** the thin interlayer is selected from the group consisting of Ti, Ta, Nb, TiTa, TiNb, TaNb, TiW, W and Cr.

2. Method according to Claim 1, **characterised in that** the interlayer has a thickness of between 20 and 50 nm.

3. Method according to Claim 1, **characterised in that** the stainless steel substrate is of type AISI 304, 316, 316L, 316Ti or 321.

4. Method according to Claim 1, **characterised in that** the metal substrate undergoes a vacuum pickling step before the thin metal interlayer is deposited.

5. Method according to Claim 1, **characterised in that** the thin interlayer is obtained by vacuum cathode sputtering or PVD.

6. Method according to Claim 1, **characterized in that** said carbon sol composition is applied onto the metal substrate, whether or not coated with an thin metal interlayer, by liquid means for a time of less than 1 sec, by roller coating, by liquid slitting, by wet spray, by tempered coating or centrifugal coating, said application being followed by a firing step consisting of convection drying from 30 sec to 2 min at 200-250°C.

7. A coated metal substrate obtained by the method according to any one of the preceding claims.

8. Use of the coated substrate according to Claim 7 for making bipolar plates of fuel cells with proton exchange membrane.

9. Use of the coated substrate according to Claim 7 for making solar thermal absorbers.

10. Use of the coated substrate according to Claim 7 for making protective layers of metal current collectors in batteries.
